# EUROPEAN PATENT APPLICATION

(11) **EP 3 862 609 A1**
(43) Date of publication of application: **11.08.2021**
(21) Application number: 18936063.9
(22) Date of filing: 05.10.2018
(51) Int. Cl.: F16L 37/14

(54) **FLUID COUPLING SYSTEM**

(71) Applicant: J Juan, S.A., 08850 Gava (ES)
(72) Inventor: GARCÍA BLANCO, Joaquín, 08850 GAVA (ES)
(74) Representative: Isern Patentes y Marcas S.L.
(86) International application number: PCT/ES2018/070650
(87) International publication number: WO 2020/070350

(57) **Abstract**

A fluid coupling system for vehicles configured to be attached to the chassis, comprising a male connecting element, a female connecting element and a retaining bolt, the male element comprising at least one axial section configured for insertion into a housing of the female element, both said elements comprising pass-through openings that coincide with respect to a common axial axis, the female element comprising an opening that crosses the housing orthogonally to the axial axis but at a distance from same, the male element comprising at least one grooved neck in at least one of the axial sections to be inserted into the female element, said neck and said opening being configured to receive the bolt in its condition of use, the bolt containing an elastic ring seated in a circumferential groove close to the end thereof.

## Description

### OBJECT OF THE INVENTION

The object of the present invention application is the registration of a coupling system for conducting a fluid, whether a liquid or gaseous fluid, particularly designed for braking, cooling or shock absorption systems in motorcycles, which incorporates significant innovations and advantages compared with the techniques used up until now.

More specifically, the invention proposes the development of a coupling system which, given its particular configuration, allows the male element and the female element to be connected quickly, while at the same time withstanding very high pressures, having a smaller size and enabling the position of one element to be fixed at will with respect to the other.

### BACKGROUND OF THE INVENTION

Coupling systems for conduits, particularly in transport vehicles, which ensure the correct supply of fluids in different systems, such as the braking system, cooling system or shock absorption system, are known in the current state of the art. These systems are subjected to a high working pressure and must prevent any leakage that may affect the correct operation of the functional elements (hydraulic pump, brake caliper, gate, ABS, etc.), so as not to risk the safety of vehicle occupants.

Coupling systems today comprise a significant number of components which entail manual labour for installing them. Furthermore, as vehicles are becoming increasingly more complex, it is increasingly more difficult to integrate these coupling systems in same. The lack of space, the wide range of elements to be connected or the large amount of connections that need to be made significantly hinder the assembly of said systems.

### DESCRIPTION OF THE INVENTION

The object of the present invention relates to a coupling system for conducting a fluid, which is configured as a novelty within the field of application. This system facilitates the connection between the elements thereof during assembly in the vehicle in a simple and rapid manner and it has a design that can be readily adapted to different required positions. All this is accomplished without giving up the most important features, which is the safety that must be demanded of couplings of this type, being capable of withstanding pressure peaks exceeding 700 bar.

The coupling system of the present invention comprises a tubular male connecting element, which is joined to a conduit, and a female connecting element, which can be joined to another conduit or to a functional element of the vehicle. The male element is configured to be fluidly connected to the female element, being inserted into an internal housing of the female element according to a common axial axis. The portion of the male element configured for insertion into the female element can be formed by more than one axial section, each having a different diameter, while at the same time the female element comprises the corresponding complementary axial sections.

The main feature of the coupling system consists of the female element comprising an opening that crosses the housing, orthogonally to the axial axis thereof but at a distance from same (that is, without coinciding on one same plane), while at the same time the male element comprises a grooved neck configured to coaxially coincide, in the coupling condition of both elements, with the wall of the opening of the female element. The coupling system in comprises turn a bolt having a size suitable for insertion into said opening of the female element and in turn for being in contact with the grooved neck of the male element. With this configuration, in its condition of use, the bolt acts as a retainer, preventing both elements from separating from one another.

As discussed, the opening crosses the internal housing of the female element, although it does not necessarily have to pass through the entire female element.

In a preferred embodiment, the neck is linear, defining a straight segment. This type of neck enables a position of the male element to be fixed inside the female element and prevents relative rotational movement between both in its condition of use. With this neck configuration, given that it can only be arranged facing the opening of the female element in a predetermined position, the bolt also cannot move forward through the opening if the position of the male element is not the correct position. Therefore, this configuration is conceived so that said elements are assembled in a single specific position and there is no rotation between them, for example so as not to interfere with other components of the vehicle (such as the frame, chassis, fork, motor, handlebar, wheel, etc.) or to prevent assembly errors when the vehicle is being assembled.

In turn, the male element can comprise several linear necks, which may or may not be juxtaposed to one another, with several straight segments being defined on the contour of the male element, orthogonal to the axial axis. Thus, there are several positions of the male element with respect to the female element in which the bolt would fit in its condition of use, giving the operator different alternatives to choose from, while at the same time preventing rotation between both elements. Preferably, when the necks are juxtaposed, the junction areas of said linear necks are rounded or are curved segments concentric to the axial axis.

In any event, the preceding configuration can slow down the assembly until the operator finds a correct connection position for placing the bolt. To solve this drawback, the elements can comprise guides, located on the axial surfaces thereof or on the orthogonal surfaces thereof, which are visible during the insertion process and are configured to allow a single insertion position for inserting one element inside another. Another possibility consists of including marks on the visible faces in the condition of splicing, which show the operator the coupling position. As a result of these configurations, the coupling of the retainer can be done more quickly, reducing assembly times. In a specific embodiment of a guide, the female element comprises at least one axial grooving on the inner axial surface of the housing, while at the same time the male element, in the portion thereof configured for insertion into the female element, comprises at least one axial protrusion configured for insertion into said axial grooving. Preferably, both the axial length of the grooving and the axial length of the protrusion is about the same dimension as the width of the grooving.

In another possible embodiment, the grooved neck is located on the entire contour of the male element, concentrically to the axial axis, by way of a groove. In this configuration, the male element does not have to be located in a specific position with respect to the female element so that the bolt can be inserted through the opening to its position of use. If it is necessary to prevent relative rotational movement between both in its condition of use, the elements can comprise the aforementioned guides, configured to allow a single position of one element inside the other.

Any type of screw, stud, rod, pin, or other similar mechanical parts can be used as a bolt, and the opening can accordingly be threaded, machined, drilled or smooth. In a preferred embodiment, the bolt contains at least one circumferential groove, preferably close to an end, which serves as a seat for an elastic ring having an outer diameter slightly larger than that of the bolt and that of the opening of the female element. With this embodiment of the bolt, once it has been inserted into the opening, the accidental detachment thereof is hindered, given that the elastic ring exerts pressure against the walls of the opening. The elastic ring is preferably a rubber O-ring. As a particular embodiment, the area of the opening corresponding to the position of the elastic ring comprises a circumferential groove to receive said ring. In another particular embodiment, the opening of the female element is a pass-through opening, the length of the bolt is greater than the length of the opening and the elastic ring protrudes from the opening. Independently of said embodiments, the bolt can comprise a screw head at one of the ends, and in that case, the opening of the female element can have a recess or bevelling by way of a compartment for housing same, such that it is concealed and prevented from being accidentally impacted.

Complementarily to the preceding embodiments, the bolt can be housed between the neck and the opening with a clearance, preferably greater than 0.5 mm. In this case, once the working fluid has entered the circuit and exerts pressure on the coupling, relative axial displacement between both coupling elements is caused, the opening of the female element becoming misaligned with respect to the grooved neck of the male element and eliminating the mentioned clearance. While pressure is maintained in the system, both ends and the bolt are hardly movable with respect to one another. Preferably, whether the opening is a blind opening or the bolt has a head, the aperture of the opening is located on an upper surface or upper area of the female element, such that if pressure is no longer exerted, the bolt will not come out due to its own weight, but rather to remove it further action is required, either by pulling the head of the bolt upward or pushing it up from below. More particularly in this case with clearance, the bolt can comprise an annular flange having a diameter smaller than the opening or an annular ring close to the end thereof. At the same time, the opening can comprise a channel configured to house said flange or ring in its condition of use, such that while pressure is maintained in the system, both ends and the bolt are completely immovable with respect to one another. As an even more preferred embodiment, to prevent the bolt from coming out during the assembly of the coupling or when there is no longer pressure exerted in the system, the male element can comprise an elastic hoop located in contact with one of the shoulders or surfaces perpendicular to the axial axis where there is a reduction in the diameter, which acts as a flexible insertion stop between the male element and the female element. In this case, the elastic hoop must have a thickness greater than that of the clearance between the bolt and the opening. In this configuration, the flange of the bolt is free with respect to the channel only when the male element is pressed against the female element, that is, when the width of the elastic hoop is reduced. When they are not being pressed against one another, the elastic hoop exerts sufficient separating thrust between the elements to keep the flange or ring of the bolt housed in the channel. Preferably in this case, the male element comprises a groove for housing said elastic hoop on the axial surface thereof and adjacent to the shoulder.

For the purpose of ensuring the sealing of the coupling when both elements are connected, preferably the male element comprises one or more grooves concentric to the axial axis, configured to accommodate an annular elastic element, such as an O-ring, for example. Said grooves can be comprised in one same or in different axial sections of the male element, which can have different diameters. In a preferred embodiment, these elastic elements comprise two toroidal bodies joined to one another, by way of a double gasket, to improve the sealing.

According to a particular embodiment, preferably the female element comprises fixing means for the fixing to the chassis of the vehicle, such as screws, staples or openings for housing same. The purpose of these fixing means is to prevent possible undesired movements of the coupling with respect to the vehicle. To simplify the design of the female element, preferably the opening of the female element for the bolt is a pass-through opening, while at the same time the bolt is a screw and is long enough to enable being screwed into a bore of the chassis of the vehicle. Therefore, in this case the bolt itself is also used to fix the coupling to the chassis. In an alternative embodiment, instead of being a screw, the bolt comprises an elastic ring located in a circumferential groove close to the end thereof, where the diameter of the ring is about twice the depth of the groove. At the same time, the chassis comprises a groove complementary to the bore arranged to receive the ring. Said geometry is configured so that the fixing or removal of the coupling system with respect to the chassis is allowed only by means of suitable forcing, therefore hindering it from being accidentally detached. In any of these cases, the chassis can have a cavity for partially housing an axial section of the female element, such that the rotation thereof with respect to the chassis is prevented even though it is only fixed by a single bolt. To that end, the periphery of said axial section preferably comprises a flat surface having a square or rectangular section.

According to a particular case, the bolt can comprise an extension configured as an elastic clip or clamp. For this purpose, the bolt comprises a section for insertion through the opening, from which an enveloping end constituting a flexible caliper or rib extends. Said enveloping end is configured to press the surface of the male element against the female element. Likewise, the female element can comprise a neck designed to receive the enveloping end and work with same to secure the coupling.

These and other features and advantages of the coupling system for conduits object of the present invention will be evident in light of the description of a preferred, but not exclusive, embodiment which is illustrated by way of non-limiting example in the drawings which are attached.

### BRIEF DESCRIPTION OF THE DRAWINGS

Figure 1 is a perspective view of an exemplary embodiment of the fluid coupling system of the present invention.
Figure 2 is a section view through the vertical plane that coincides with the axial axis (X) of the coupling system of the embodiment of Fig. 1 in its condition of use.
Figure 3 is a view of section A-A indicated in Fig. 2.
Figure 4 is a perspective view of a preferred embodiment of the male element of the coupling system.
Figure 5 is a plan view of the male element of Fig. 4.
Figure 6A is a view of section B-B of Fig. 5 for a first embodiment of the male element.
Figure 6B is the same view of Fig. 6A for a second embodiment of the male element.
Figure 6C is the same view of Fig. 6A for a third embodiment of the male element.
Figure 6D is the same view of Fig. 6A for a fourth embodiment of the male element.
Figure 7 is a perspective view of a sixth embodiment of the coupling system.
Figure 8 is a section view through the vertical plane that coincides with the axial axis (X) of the coupling system of the embodiment of Fig. 7 in its condition of use.
Figure 9A is a view of section C-C of Fig. 8 for a first embodiment of the fixing of the coupling system to the chassis of the vehicle.
Figure 9B is a view of section C-C of Fig. 8 for a second embodiment of the fixing of the coupling system to the chassis of the vehicle.
Figure 9C is a view of section C-C of Fig. 8 for a third embodiment of the fixing of the coupling system to the chassis of the vehicle.
Figure 10 is a section view through the vertical plane that coincides with the axial axis (X) of an optional fifth embodiment of the coupling system.

### DESCRIPTION OF PREFERRED EMBODIMENTS

In light of the aforementioned figures, and in accordance with the adopted numbering, one may observe therein preferred exemplary embodiments of the invention, which comprise the parts and elements indicated and described in detail below.

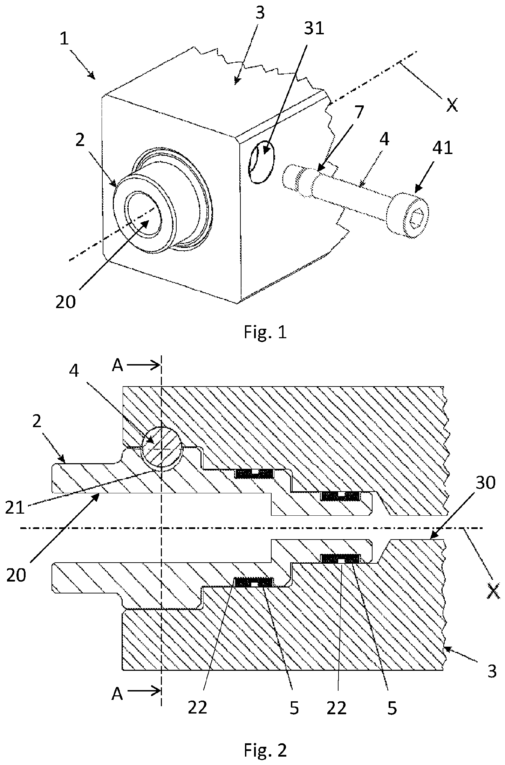

As shown in Fig. 1, the preferred embodiment of the present invention consists of a coupling system (1) for conducting a fluid. Said system comprises a male connecting element (2) and a female connecting element (3), the male element (2) being configured to be fluidly connected to the female element (3), being inserted into an internal housing of the female element (3) according to a common axial axis (X). In this embodiment, the portion of the male element (2) configured for insertion into the female element (3) is formed by three axial sections, each having a different diameter, while at the same time the female element (3) comprises the corresponding complementary axial sections.

The female element (3) comprises an opening (31) that crosses the housing through the widest inner axial segment. This opening (31) is located orthogonal to the axial axis (X) thereof and at a distance from same (that is, without coinciding on one same plane). In turn, the male element (2) comprises a grooved neck (21) in the final axial section to be inserted into the female element (3). Said neck (21) and said opening (31) are configured to receive a bolt (4) in its condition of use.

The coupling system (1) further comprises a bolt (4) having a size suitable for insertion into said opening (31) and in turn for being in contact with the grooved neck (21) of the male element (2). With this configuration, in its condition of use, the bolt (4) acts as a retainer, preventing both elements (2, 3) from separating from one another.

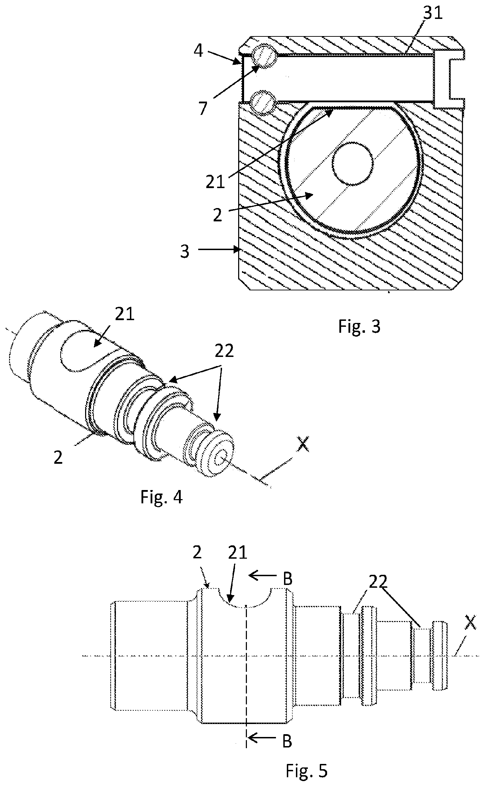

In this preferred embodiment, the bolt (4) comprises a screw head (41) for an Allen key, while the opening (31) comprises the corresponding neck for housing said head (41). In turn, the opening (31) passes through the entire female element (31), and both ends of the bolt (4) are flush with the corresponding surfaces of the female element (2). As can be seen in Fig. 1 and Fig. 3, the bolt (4) contains an elastic ring (7) seated in a circumferential groove close to the end of the bolt (4). In turn, the female element (3) comprises a neck configured to house the elastic ring (7).

As shown in Fig. 2, for the purpose of ensuring the sealing of the coupling system (1) when both elements (2, 3) are connected, the male element (2) of this preferred embodiment comprises two grooves (22) concentric to the axial axis, located in different axial sections, which are configured to accommodate an annular elastic element (5). In the embodiment shown in Fig. 2, the elastic elements (5) comprise two toroidal bodies joined to one another, by way of a double gasket.

In relation to another aspect of the invention, in Figs. 3, 4, 5 and 6A a first embodiment can be seen where the neck (21) is linear, being defined as a straight segment. This configuration is conceived so that said elements (2, 3) can be assembled in a single relative position.

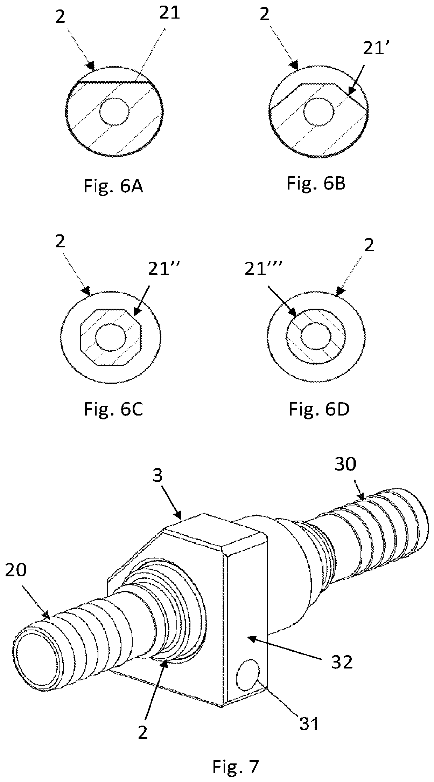

In a second embodiment shown in Fig. 6B, the neck (21') comprises three linear segments, also orthogonal to the axial axis (X). In this embodiment, therefore, there are three positions of the male element (2) with respect to the female element (3) in which the bolt (4) fits in its condition of use, while at the same time preventing rotation between both elements (2, 3).

In a third embodiment shown in Fig. 6C, the neck (21") comprises eight linear segments distributed along the entire perimeter. In this embodiment, the junction areas of said linear necks (21") are rounded. In an extreme embodiment shown in Fig. 6D, the grooved neck (21"') comprises thirty-two linear segments, with the rounded junction areas, and the function of which is virtually equivalent to a single concentric groove.

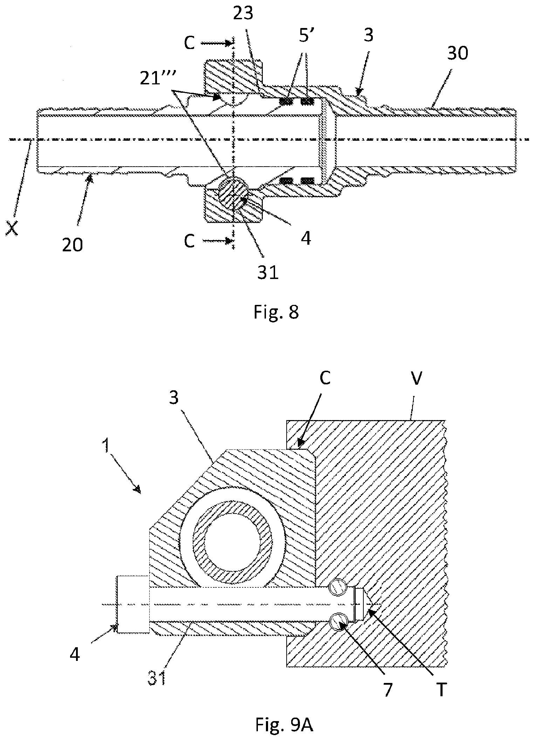

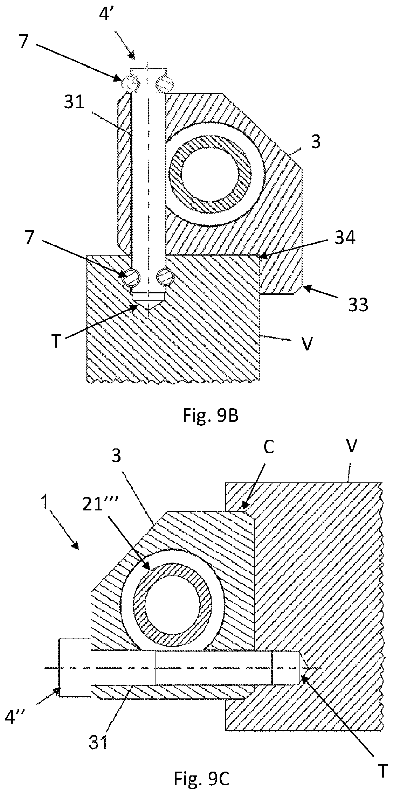

According to a particular embodiment, Figs. 7 and 8 show a coupling system (1), with two tubes (20, 30) connected said male element (2) and female element (3), where the female element (3) comprises an outer side (32) with a rectangular geometry and the opening (31) is located on said side, while at the same time being a pass-through opening. This configuration is appropriate for fixing the coupling system (1) to the chassis (V) of the vehicle by means of a single bolt (4, 4', 4"), as shown in Figures 9A, 9B and 9C. In these embodiments, the bolt (4, 4', 4") has a length sufficient for crossing the opening (31) of the female element (3) and being inserted into a bore (T) made in the chassis (V). At the same time, the chassis (V) comprises a groove complementary in the bore (T) arranged to receive the ring (7). Said geometry of the bolt (4) and chassis (V) is configured so that the fixing or removal of the coupling system (1) with respect to the chassis (V) is allowed only by means of suitable forcing between same (4, V). In the embodiments of Figs. 9A and 9C, the chassis (V) has a cavity (C) for housing a section of the female element (3). In the embodiment of Fig. 9B, instead of the head, the bolt (4') comprises another elastic ring (7) as a fixing element, while the side (32) of the female element (3) has a projection (33) which forms a rectangular vertex (34) configured to fit with an edge of the chassis (V). In the embodiment shown in Fig. 9C, in contrast, the bolt is a threaded screw.

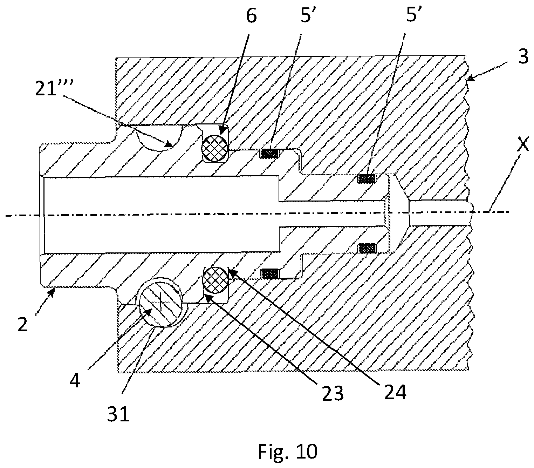

In the optional embodiment shown in Fig. 10, the bolt (4) is housed between the neck (21"') and the opening (31) with a certain amount of clearance. To prevent the bolt from coming out during the assembly of the coupling or when there is no longer pressure exerted in the system, the male element (2) comprises an elastic hoop (6) located in contact with the first shoulder (23). This elastic hoop (6) acts as a flexible insertion stop between the male element (2) and the female element (3), such that when the operator is not pressing the elements (2, 3) against one another, the elastic hoop exerts sufficient pressure to keep the bolt (4) in the opening (31) due to friction between the walls thereof. In the embodiment shown, the male element (2) comprises a groove (24) for housing said elastic hoop (6) on the axial surface adjacent to the first shoulder (23). In this embodiment, as an example, the male element (2) comprises two elastic sealing elements (5') having a single body, unlike the elastic elements (5) shown in Fig. 2.

The details, shapes, dimensions and other secondary elements, as well as the materials used in manufacturing the fluid coupling system of the invention, may be suitably replaced with others that are technically equivalent and do not depart from the essential nature of the invention or from the scope defined by the claims included below.

## Claims

1. A fluid coupling system (1) for vehicles configured to be attached to the chassis (V) of vehicles, comprising a male connecting element (2), a female connecting element (3) and a retaining bolt (4), the male element (2) comprising at least one axial section configured for insertion into a housing of the female element (3), both said elements (2, 3) comprising pass-through openings (20, 30) that coincide with respect to a common axial axis (X), the female element comprising (3) an opening (31) that crosses the housing orthogonally to the axial axis (X) but at a distance from same, the male element (2) comprising at least one grooved neck (21) in at least one of the axial sections to be inserted into the female element (3), said neck (21) and said opening (31) being configured to receive the bolt (4) in its condition of use, **characterised in that** said bolt contains an elastic ring (7) seated in a circumferential groove close to the end of the bolt (4).

2. The system according to claim 1, **characterised in that** the elastic ring (7) is a rubber O-ring.

3. The system according to claim 1, **characterised in that** the bolt (4) has a screw head and the opening (31) comprises a neck configured to house said head.

4. The system according to claim 1, **characterised in that** the bolt (4') comprises another elastic ring (7) seated at the other end.

5. The system according to claim 1, **characterised in that** the opening (31) comprises a circumferential groove configured to house the elastic element (7) in its condition of use.

6. The system according to claim 1, **characterised in that** the neck (21', 21", 21"') of the male element (2) is formed by more than one juxtaposed linear segment, the junction area between them being rounded.

7. The system according to claim 1, **characterised in that** the bolt (4) is housed between the grooved neck (21) and the opening (31) with a certain amount of clearance.

8. The system according to claim 7, **characterised in that** the male element comprises an elastic hoop (6) located in contact with one of the shoulders (23) or surfaces orthogonal to the axial axis (X), which acts as a flexible insertion stop between the male element (2) and the female element (3).

9. The system according to claim 8, **characterised in that** the male element comprises on the surface of the shoulder a channel for housing said elastic hoop (7).

10. The system according to claim 8, **characterised in that** the inlet aperture of the opening (31) is positioned in an upper area of the female element (3).

11. The system according to claim 8, **characterised in that** the inlet aperture of the opening (31) is positioned in a lower area of the female element (3).

12. The system according to claim 1, **characterised in that** the opening (31) of the female element (3) is a pass-through opening and the length of the bolt (4) is sufficient for inserting the end into a bore (T) made in the chassis (V) of the vehicle.

13. The system according to claim 12, **characterised in that** the female element (3) comprises an axial section, the outer side of which has a flat geometry, and it has a projection (33) which forms a rectangular vertex (34) configured to fit with an edge of the chassis (V).

14. The system according to claim 12, **characterised in that** the female element (3) comprises an axial section, the outer side of which has a geometry complementary to a cavity (C) comprised in the chassis (V) of the vehicle, such that the cavity (C) can partially house said section.

15. The system according to claim 13, **characterised in that** the outer side of the male element (2) and the cavity (C) comprise a rectangular geometry, being complementary to one another.
